# EUROPEAN PATENT SPECIFICATION

(11) **EP 2 881 023 B1**
(45) Date of publication and mention of the grant of the patent: **26.10.2016**
(21) Application number: 13196115.3
(22) Date of filing: 06.12.2013
(51) Int. Cl.: A47J 36/06, A47J 27/09

(54) **Sealing diaphragm**
Verschlussmembran
Diaphragme d'étanchéité

(43) Date of publication of application: 10.06.2015
(73) Proprietor: BSH Hausgeräte GmbH, 81739 München (DE)
(72) Inventor: Brecko, Ales, 3000 Celje (SI); Kovacec, Bostjan, 1420 Trbovlje (SI); Strojansek, Aleksander, 3331 Nazarje (SI); Pesec, Jurij, 3301 Petrovce, Slowenien (SI)

(56) References cited:
- EP-A2- 2 342 996
- FR-A- 1 568 724
- US-A- 2 516 202
- US-A- 3 209 746

## Description

### Background of the invention

The present invention concerns a lid arrangement for a food processing appliance, especially for chopping, mixing and similar processing of the food.

### State of the Art

As far as we are aware, there are no similar solutions implemented in the current state of the art. The sealing of mini-choppers is usually achieved by using a lid with an outside screw mount, wherein the lid is used as a container at the same time. It is fastened via the screw to the body of the container and sealed with a simple sealing at the bottom. This kind of sealing does not allow for any pressure equilibration as it has no integrated outlet of steam or hot air. Commonly used solutions for pressure compensation include an air outlet on the lid or top section of the processing container, frequently in the form of a filling funnel with holes for air in order to facilitate pressure equalizing. Such solutions do not provide optimal sealing. Such a Lid is known from document US 2 516 202.

### Problem to be solved

The object underlying the present invention is to provide a food processing appliance that allows effective pressure compensation between the food processing area and the atmosphere while at the same time providing effective sealing.

### Solution according to the invention

In order to achieve the object underlying the invention, the present invention provides a lid arrangement as defined in claim 1. Advantageous embodiments that can be implemented by themselves or in combination are described in dependent claims.

A first aspect of the invention is a lid arrangement for a food processing appliance, wherein the lid arrangement comprises a diaphragm that provides sealing between the lid and the processing bowl of the appliance, said diaphragm being adapted to allow pressure compensation by venting air in case the pressure in the processing bowl exceeds a predetermined level. Processing of food within the processing bowl is usually performed with the lid attached to it to prevent the loss of the processed ingredients resulting through the opening. However, when the lid is sealed onto the processing bowl, pressure within the processing bowl may increase due to heating or other processes occurring during the processing. Therefore, the pressure difference to the atmosphere needs to be compensated. According to the invention, that is achieved through venting of the air from the processing bowl. The design of the sealing allows that a threshold for pressure within the processing bowl is determined. When the pressure exceeds this threshold, the sealing effectively becomes a valve and releases air until the pressure drops below the predetermined level. The diaphragm with the sealing also serves as the means of controlled release of the vented air through a prolonged ventilation path starting in the center area of the diaphragm along the whole length of the top and the walls of the lid. Such an extended path also serves the purpose of cooling the vented air substantially before it can leave the system and come in contact with the consumer, therefore significantly reducing the risk of burns.

According to a second aspect of the present invention a food processing appliance comprising the lid arrangement is provided.

### Embodiments of the invention

In an advantageous solution, the said diaphragm is implemented to cover the whole opening of the processing bowl. It is necessary to cover the whole opening of the processing bowl in order to achieve following effects - efficient sealing of the processing bowl when the pressure is below the threshold of venting, and/or efficient streaming of the vented air to the ventilation path, when the pressure threshold is exceeded.

"Whole opening" means the entire area at the open end of the processing bowl bounded by the end of the walls of the processing bowl. It is generally in a shape of a rounded disc, but can conceivably be of other shapes as well.

In a preferred embodiment, between the top of the mounted lid and the diaphragm, an intermediate compartment is formed, through which the air is vented. Such an intermediate compartment is instrumental as part of the ventilation path for the vented air which starts at the center of the plane of the diaphragm, continues between the diaphragm and the top of the mounted lid and, if pressure is high enough, continues past the venting rim into the overlap area between the outer wall of the processing bowl and the inner wall of the lid. This ensures that the ventilation path is as long as possible and allows the vented air to cool substantially, before it is finally released from the appliance.

Specifically, the said diaphragm is preferably of circular shape resembling a disc and is also comprising a sealing positioned on its circumference. The circular shape is preferable as the bowls are usually round at the top, however this is not precluding any other shapes corresponding possible shapes of the top edge of the bowl. The disc shape is beneficial to achieve the best possible fitting to the lid, the top of which, when mounted on the lid, is also preferably shaped as a disc. This results in a narrow intermediate compartment in between, which serves as part of the ventilation path and also extends the length of this path.

In another preferred embodiment, said sealing comprises a venting rim that extends substantially axially to the plane of the diaphragm in the direction towards the top of the mounted lid and is obstructing the passage of air until the pressure within the processing bowl reaches a predetermined level. The venting rim seals the venting path when the pressure within the processing bowl is lower than the threshold and is displaced sufficiently when the pressure is above the threshold to allow the passage of the vented air further along the ventilation path. This results in the vented air leaving the appliance and in compensation of pressure.

In a further preferred solution, said sealing comprises a bowl sealing rim that is further away from the center of the diaphragm than said venting rim and seals the contact between the outer edge of the diaphragm and the wall of the processing bowl. The bowl sealing rim seals the alternative passage of air through a shorter ventilation path bypassing the passage through the intermediate compartment. The passage of pressurized air through this shortcut would result in lower cooling effect which is not desirable. Furthermore, when the vented air flows through the intermediate compartment, passing by and displacing the venting rim, the geometry of the venting rim in connection with the bowl sealing rim results in additional contraction forces in the area of the bowl sealing rim and in even tighter sealing at that point. In this manner a kind of a positive feed-back loop is established. Higher pressure in the processing bowl results in tightening of the sealing at the bowl sealing rim.

It is preferable that said diaphragm comprises a contoured area and a contact space between the inside of the processing bowl and the intermediate compartment, said contoured area being designed to prevent sealing between said areas when the pressure in the bowl is increased. The contoured area is positioned in the central area of the disc to prevent the diaphragm to be squeezed into the top of the mounted lid when the pressure grows and thus ensures that the ventilation path remains open even at higher pressures.

It is conceivable, that said contoured area is in the form of rigid or semi-rigid ondulations extending essentially perpendicular from the plane of the diaphragm which are able to make contact with the top of the mounted lid when the pressure within the processing bowl is increased, but at the same time due to ondulating structure maintain enough open space to allow passage of air from the processing bowl to said intermediate compartment. It is essential that the path of the vented air is not sealed off when the pressure is increased within the processing bowl. This might occur especially in the central area of the diaphragm as the diaphragm could be pressed upwards to contact the top of the mounted lid and prevent the vented air from passing. Said ondulations are designed to preserve at least a partially open path between the contact space and the intermediate compartment.

"Ondulations" means any protrusions, waves, rising or lowering elements that are deviating from the plane of the diaphragm, especially when they are repeating along the circumference of the central section of the plane of the diaphragm and are designed to preserve at least partial path of vented air even when the pressure in the processing bowl is increased enough to potentially seal off the passage in absence of such structures.

Preferably, the vented air exits from the appliance through a prolonged ventilation path along the overlap area between the outer wall of the bowl and the inner wall of the lid whereby it is significantly cooled. As one of the most important aims of the ventilation system is to ensure that the vented air is not too hot as it exits the appliance, potentially posing risk to the user, the of the ventilation path must be as long as possible to achieve cooling. This cooling is also increased as the vented air passes along the whole side of the lid which is in contact with the cooler air outside and not in direct contact with the hotter side of the processing bowl.

It is preferable that the overlap area is cylindrical in form and covers the entire circumference of the walls of the processing bowl and the lid. Thus, the vented air can exit the appliance in any radial direction from the center of the diaphragm and along any part of the side walls of the lid. This increases the cooling capacity of the setting since the heat transfer is essentially occurring through the whole surface of the lid.

In another embodiment, said contact space is positioned in the center of the plane of the diaphragm adjacent to the contoured area and is U-shaped, essentially extending from the plane of the diaphragm towards the processing bowl with only a small passage for air from the processing bowl to the contact area so as to minimize the possibility of the processed ingredients entering the intermediate compartment. Prevention of the processed ingredients within the processing bowl from entering the contact space and especially from passing through the contour area into the intermediate space is important. Namely, it ensures that the venting path remains clean and unobstructed. The leakage of ingredients to the venting path is minimized by using a small hole in the bottom of the contact space which is only large enough to allow fast flow of air and furthermore by using a U-shaped contact space which acts as a funnel that returns the leaked processed ingredients to the processing bowl when the pressure is reduced. Additionally, the small hole prevents larger and stronger flows of air and/or processed food to occur and possibly reach the contoured area and beyond.

In yet another preferred embodiment, said diaphragm is removably attached to the lid for easier cleaning. This solution allows for easier cleaning of the parts as they can be washed separatel.

Optionally, said diaphragm and said lid are integral parts of a single construction piece, preferably in a 2K or similar setting. This solution may be beneficial regarding ease and cost of production, however it has certain deficiencies regarding cleaning.

Features described in the claims and in the description can have relevance to the presented invention either by themselves or in any combination thereof.

### Brief description of the drawings

The invention is explained in more detail below on the basis of an exemplary embodiment and with reference to schematic drawings in which:
Figure 1 shows a schematic presentation of the food processing appliance with the mounted lid;
Figure 2 shows a cross-section of the functioning food processing appliance; and
Figure 3 shows a schematic presentation of the diaphragm.

### Detailed description of the invention

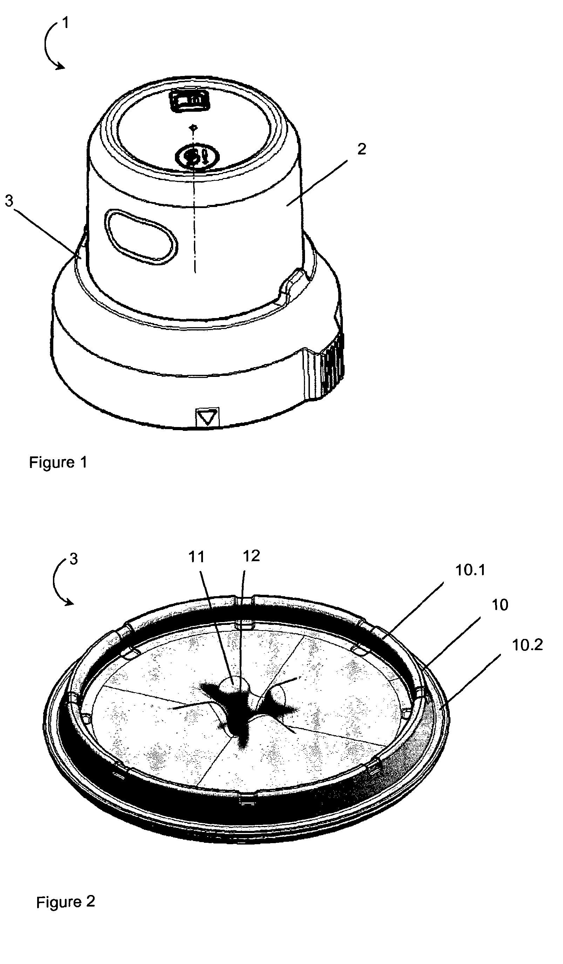

Figure 1 shows a schematic presentation of the food processing appliance 1 with the mounted lid 2. During processing of various foods, especially fluids (cold, warm and hot), a dynamic force appears at time of startup. This dynamic force is reflected in an increase of pressure within the processing bowl 4. Also, when hot ingredients are processed, the pressure is additionally increased due to expansion of air within the processing bowl 4. This results in the need to compensate pressures within the processing bowl 4 and in the surrounding of the processing bowl 4. The use of a sealing diaphragm 3 according to this invention, provides adequate radial and axial sealing. The advantage provided by this design of the sealing is in a relatively low force needed to achieve the sealing. This in turn results in a lower momentum needed for closing of the lid 2. As a result, the lifetime of the product is increased.

In Figure 2 a schematic presentation of the diaphragm. On the circumference of the diaphragm 3, the sealing 10 is shown. The sealing 10 consists of two connected areas, the venting rim 10.1 extends essentially axial to the plane of the diaphragm 3, towards the top 9 of the mounted lid 2 in the assembled position. This serves as a gateway and only allows the vented air to flow past the venting rim 10.1 when the predetermined threshold level of pressure is exceeded within the processing bowl 4. The second area of the sealing 10 is the bowl sealing rim 10.2 which seals the contact between the lid 2 and the wall of the processing bowl 4. In its central area, the diaphragm 3 comprises the contoured area 11 that ensures passage of vented air from the processing bowl 4 towards the venting rim 10.1 even when pressures are increased. The central U-shaped part of the diaphragm 3 projecting toward the processing bowl 4 is the contact space 12 which functions as the barrier for the processed ingredients leaking from the processing bowl 4 while allowing the vented air to pass unobstructed.

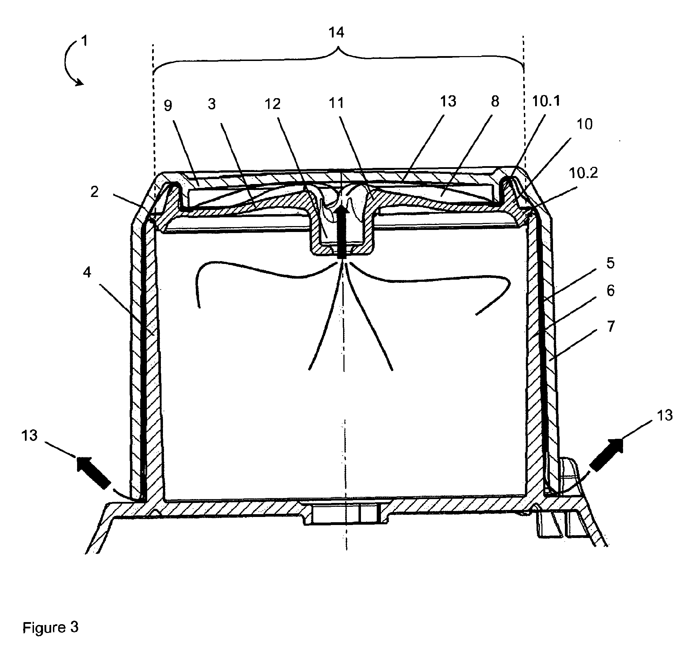

In figure 3, a cross-section of the functioning food processing appliance 1 is shown. The sealing diaphragm 3 is designed in such a way, that the higher the pressure to the sealing 10, the stronger the bowl sealing rim 10.2 presses to the edge of the wall of the processing bowl 4 and the sealing effect is therefore better. The solution according to the invention provides a safe and efficient venting path 13 for the steam and/or hot air, that needs to be vented from the food processing appliance 1. It must also be ensured that this venting does not diminish the sealing function. As the length of the venting path 13 is maximized, the vented air that exists the food processing appliance 1 at the final point, and possibly comes into contact with the user, is at a significantly lower temperature than the temperature in the container this provides an important safety feature of the food processing appliance 1.

As the lid 2 is placed onto the food processing appliance 1, the diaphragm 3 is positioned between the top 9 of the mounted lid 2 and the opening 14 of the processing bowl 4. The sealing 10 is compressed and the venting path 13 is closed. In the space between the top surface of the diaphragm 3 and the top 9 of the lid 2, an intermediate compartment 8 filled with air is formed. In the central part of the plane of the diaphragm 3, the diaphragm 3 comprises a contoured area 11 that is intended to allow the flow of air even when the pressure within the processing bowl 4 is increased high enough that the diaphragm 3 could potentially be pressed upwards to the top 9 of the mounted lid 2. This would potentially prevent the flow of vented air, however, the contoured area 11 is designed rigid enough to withstand these pressures and allow air to flow at least through a somewhat reduced area. In the central part of the plane of the diaphragm 3, a contact space 12 connects the processing area of the processing bowl 4 to the intermediate compartment 8. Said contact space 12 is U-shaped and projecting below the plane of the diaphragm. It has a small hole on the bottom to allow fast flow of vented air but at the same time minimize leakage of the processed ingredients from the processing bowl 4. The leaked processed ingredients are funnelled downwards back to the processing bowl 4.

When the food is being processed within the processing bowl 4 and the pressure is below the threshold for venting, the venting path 13 is closed as the venting rim 10.1 is able to withstand the air pressure. As the pressure exceeds the predetermined level, the venting rim 10.1 of the diaphragm 3 is displaced sufficiently that the vented air is able to flow past it and continue from the intermediate compartment 8 along the ventilation path 13 through the cylindrical overlap area 5 between the outer wall 6 of the processing bowl 4 and the inner wall 7 of the lid 2. On this path, the vented air is significantly cooled and consequently does not present any danger to the user when exiting the food processing appliance 1. At the time of the displacement of the venting rim 10.1, said venting rim 10.1 exerts additional force on the entire sealing 10 so as to increase the sealing force working on the bowl sealing rim 10.2. This results in tighter sealing at this point and in the prevention of the vented air escaping through this alternative route even though the pressure has significantly increased.

### Feature list

- 1: Food processing appliance
- 2: Lid
- 3: Diaphragm
- 4: Processing bowl
- 5: Overlap area
- 6: Outer wall of the processing bowl
- 7: Inner wall of the lid
- 8: Intermediate compartment
- 9: Top of the mounted lid
- 10: Sealing
- 10.1: Venting rim
- 10.2: Bowl sealing rim
- 11: Contoured area of the diaphragm
- 12: Contact space
- 13: Ventilation path
- 14: Opening of the processing bowl

## Claims

1. A lid (2) arrangement for a food processing appliance (1) comprising a diaphragm (3) that provides sealing between the lid (2) and the processing bowl (4) of the appliance (1) said diaphragm (3) being adapted to allow pressure compensation by venting air in case the pressure in the processing bowl (4) exceeds a predetermined level and, **characterized in** said diaphragm (3) also comprises a sealing (10) positioned on its circumference, said sealing (10) comprising a venting rim (10.1) that extends substantially axially to the plane of the diaphragm (3) in the direction towards the top (9) of the mounted lid (2) and is obstructing the passage of air until the pressure within the processing bowl (4) reaches a predetermined level.

2. The lid (2) arrangement according to claim 1, **characterized in that** said diaphragm (3) is implemented to cover the whole opening (14) of the processing bowl (4).

3. The lid (2) arrangement according to claims 1 or 2, **characterized in that** between the top (9) of the mounted lid (2) and the diaphragm (3), an intermediate compartment (8) is formed, through which the air is vented.

4. The lid (2) arrangement according to any of the previous claims, **characterized in that** said diaphragm (3) is preferably of circular shape resembling a disc.

5. The lid (2) arrangement according to any of the previous claims, **characterized in that** said sealing (10) comprises a bowl sealing rim (10.2) that is further away from the center of the diaphragm (3) than said venting rim (10.1) and seals the contact between the outer edge of the diaphragm (3) and the wall of the processing bowl (4)

6. The lid (2) arrangement according to any of the previous claims, **characterized in that** said diaphragm (3) comprises a contoured area (11) and a contact space (12) between the inside of the processing bowl (4) and the intermediate compartment (8), said contoured area (11) being designed to prevent sealing between said areas when the pressure in the processing bowl (4) is increased.

7. The lid (2) arrangement according to claim 6, **characterized in that** said contoured area (11) is in the form of rigid or semi-rigid ondulations extending essentially perpendicular from the plane of the diaphragm (3) which are able to make contact with the top (9) of the mounted lid (2) when the pressure within the processing bowl (4) is increased, but at the same time due to ondulating structure maintain enough open space to allow passage of air from the processing bowl (4) to said intermediate compartment (8)

8. The lid (2) arrangement according to any of the previous claims, **characterized in that** the vented air exits from the appliance (1) through a prolonged ventilation path (13) along the overlap area (5) between the outer wall (6) of the bowl (4) and the inner wall (7) of the lid (2) whereby it is significantly cooled.

9. The lid (2) arrangement according to claim 8, **characterized in that** the overlap area (5) is cylindrical in form and covers the entire circumference of the walls of the processing bowl (4) and the lid (2)

10. The lid (2) arrangement according to claims 6 to 9, **characterized in that** said contact space (12) is positioned in the center of the plane of the diaphragm (3) adjacent to the contoured area (11) and is U-shaped, essentially extending from the plane of the diaphragm (3) towards the processing bowl (4) with only a small passage for air from the processing bowl (4) to the contact area (12), so as to minimize the possibility of the processed ingredients entering the intermediate compartment (8).

11. The lid (2) arrangement according to any of the previous claims, **characterized in that** said diaphragm (3) is removably attached to the lid (2) for easier cleaning.

12. The lid (2) arrangement according to claims 1 to 10, **characterized in that** said diaphragm (3) and said lid (2) are integral parts of a single construction piece, preferably in a 2K or similar setting.

13. A food processing appliance (1) comprising the lid (1) according to claims 1 to 12.

## Patentansprüche

1. Deckel-(2)-Anordnung für ein Lebensmittelverarbeitungsgerät (1) mit einer Membran (3), die für eine Abdichtung zwischen dem Deckel (2) und der Verarbeitungsschüssel (4) des Geräts (1) sorgt, wobei die Membran (3) so ausgelegt ist, dass sie, falls der Druck in der Verarbeitungsschüssel (4) einen vorgegebenen Pegel übersteigt, durch Ablassen von Luft einen Druckausgleich ermöglicht, und **dadurch gekennzeichnet, dass** die Membran (3) auch eine an ihrem Umfang positionierte Dichtung (10) umfasst, die einen Entlüftungsrand (10.1) umfasst, der in Richtung zur Oberseite (9) des befestigten Deckels (2) im Wesentlichen axial zur Ebene der Membran (3) verläuft und das Hindurchströmen von Luft behindert, bis der Druck in der Verarbeitungsschüssel (4) einen vorgegebenen Pegel erreicht.

2. Deckel-(2)-Anordnung nach Anspruch 1, **dadurch gekennzeichnet, dass** die Membran (3) so ausgeführt ist, dass sie die gesamte Öffnung (14) der Verarbeitungsschüssel (4) abdeckt.

3. Deckel-(2)-Anordnung nach Anspruch 1 oder 2, **dadurch gekennzeichnet, dass** zwischen der Oberseite (9) des befestigten Deckels (2) und der Membran (3) ein Zwischenraum (8) ausgebildet ist, durch den die Luft abgelassen wird.

4. Deckel-(2)-Anordnung nach einem der vorhergehenden Ansprüche, **dadurch gekennzeichnet, dass** die Membran (3) vorzugsweise kreisförmig ist und wie eine Scheibe aussieht.

5. Deckel-(2)-Anordnung nach einem der vorhergehenden Ansprüche, **dadurch gekennzeichnet, dass** die Dichtung (10) einen Schüsseldichtungsrand (10.2) umfasst, der weiter von der Mitte der Membran (3) entfernt liegt als der Entlüftungsrand (10.1) und die Verbindung zwischen der Außenkante der Membran (3) und der Wand der Verarbeitungsschüssel (4) abdichtet.

6. Deckel-(2)-Anordnung nach einem der vorhergehenden Ansprüche, **dadurch gekennzeichnet, dass** die Membran (3) eine konturierte Region (11) und einen Kontaktbereich (12) zwischen der Innenseite der Verarbeitungsschüssel (4) und dem Zwischenraum (8) umfasst, wobei die konturierte Region (11) so gestaltet ist, dass sie eine Abdichtung zwischen den Regionen verhindert, wenn sich der Druck in der Verarbeitungsschüssel (4) erhöht.

7. Deckel-(2)-Anordnung nach Anspruch 6, **dadurch gekennzeichnet, dass** die konturierte Region (11) in Form von festen oder halbfesten Wellen vorliegt, die im Wesentlichen senkrecht zur Ebene der Membran (3) verlaufen und in der Lage sind, die Oberseite (9) des befestigten Deckels (2) zu berühren, wenn sich der Druck in der Verarbeitungsschüssel (4) erhöht, gleichzeitig aber aufgrund der welligen Struktur so viel Freiraum lassen, dass Luft aus der Verarbeitungsschüssel (4) in den Zwischenraum (8) strömen kann.

8. Deckel-(2)-Anordnung nach einem der vorhergehenden Ansprüche, **dadurch gekennzeichnet, dass** die abgelassene Luft über einen verlängerten Entlüftungsweg (13) entlang der Überlappungsregion (5) zwischen der Außenwand (6) der Schüssel (4) und der Innenwand (7) des Deckels (2) aus dem Gerät (1) austritt, wodurch sie sich beträchtlich abkühlt.

9. Deckel-(2)-Anordnung nach Anspruch 8, **dadurch gekennzeichnet, dass** die Überlappungsregion (5) zylinderförmig ist und den gesamten Umfang der Wände der Verarbeitungsschüssel (4) und des Deckels (2) abdeckt.

10. Deckel-(2)-Anordnung nach Anspruch 6 bis 9, **dadurch gekennzeichnet, dass** der Kontaktbereich (12) neben der konturierten Region (11) in der Mitte der Ebene der Membran (3) positioniert und U-förmig ist und im Wesentlichen von der Ebene der Membran (3) aus zur Verarbeitungsschüssel (4) hin verläuft, wobei von der Verarbeitungsschüssel (4) zum Kontaktbereich (12) nur ein kleiner Durchgang für Luft besteht, um die Wahrscheinlichkeit, dass die verarbeiteten Zutaten in den Zwischenraum (8) gelangen, auf ein Minimum zu beschränken.

11. Deckel-(2)-Anordnung nach einem der vorhergehenden Ansprüche, **dadurch gekennzeichnet, dass** die Membran (3) zum einfacheren Reinigen abnehmbar an dem Deckel (2) angebracht ist.

12. Deckel-(2)-Anordnung nach den Ansprüchen 1 bis 10, **dadurch gekennzeichnet, dass** die Membran (3) und der Deckel (2) integrale Bestandteile eines Einzelbestandteils, vorzugsweise in einer 2K- oder ähnlichen Einrichtung, sind.

13. Lebensmittelverarbeitungsgerät (1) mit dem Deckel (1) nach den Ansprüchen 1 bis 12.

## Revendications

1. Agencement de couvercle (2) pour un appareil (1) de transformation d'aliments, comprenant un diaphragme (3) qui assure l'étanchéité entre le couvercle (2) et le bol de transformation (4) de l'appareil (1), ledit diaphragme (3) étant adapté pour permettre une compensation de pression grâce à une purge d'air dans le cas où la pression à l'intérieur du bol de transformation (4) dépasse un niveau prédéterminé, et **caractérisé en ce que** ledit diaphragme (3) comprend également une garniture d'étanchéité (10) située sur sa circonférence, ladite garniture d'étanchéité (10) comprenant un rebord de purge (10.1) qui s'étend de manière essentiellement axiale au plan du diaphragme (3), dans la direction du sommet (9) du couvercle (2) mis en place, et qui empêche le passage de l'air jusqu'à ce que la pression à l'intérieur du bol de transformation (4) atteigne un niveau prédéterminé.

2. Agencement de couvercle (2) selon la revendication 1, **caractérisé en ce que** ledit diaphragme (3) est conçu pour couvrir la totalité de l'ouverture (14) du bol de transformation (4).

3. Agencement de couvercle (2) selon les revendications 1 ou 2, **caractérisé en ce qu'**un compartiment intermédiaire (8) par l'intermédiaire duquel l'air est purgé est formé entre le sommet (9) du couvercle (2) mis en place et le diaphragme (3).

4. Agencement de couvercle (2) selon l'une quelconque des revendications précédentes, **caractérisé en ce que** ledit diaphragme (3) a de préférence une forme circulaire similaire à un disque.

5. Agencement de couvercle (2) selon l'une quelconque des revendications précédentes, **caractérisé en ce que** ladite garniture d'étanchéité (10) comprend un rebord d'étanchéité de bol (10.2) qui est plus éloigné du centre du diaphragme (3) que ledit rebord de purge (10.1) et étanchéifie le contact entre le bord externe du diaphragme (3) et la paroi du bol de transformation (4).

6. Agencement de couvercle (2) selon l'une quelconque des revendications précédentes, **caractérisé en ce que** ledit diaphragme (3) comprend une zone profilée (11) et un espace de contact (12) entre l'intérieur du bol de transformation (4) et le compartiment intermédiaire (8), ladite zone profilée (11) étant conçue pour empêcher l'étanchéité entre lesdites zones lorsque la pression à l'intérieur du bol de transformation (4) augmente.

7. Agencement de couvercle (2) selon la revendication 6, **caractérisé en ce que** ladite zone profilée (11) se présente sous la forme d'ondulations rigides ou semi-rigides s'étendant de manière essentiellement perpendiculaire par rapport au plan du diaphragme (3), qui peuvent entrer en contact avec le sommet (9) du couvercle (2) mis en place lorsque la pression à l'intérieur du bol de transformation (4) augmente, mais qui en même temps, grâce à leur structure ondulée, ménagent un espace ouvert suffisant pour permettre le passage de l'air du bol de transformation (4) vers ledit compartiment intermédiaire (8).

8. Agencement de couvercle (2) selon l'une quelconque des revendications précédentes, **caractérisé en ce que** l'air purgé sort de l'appareil (1) en empruntant un trajet de ventilation prolongé (13) le long de la zone de chevauchement (5) entre la paroi extérieure (6) du bol (4) et la paroi intérieure (7) du couvercle (2), grâce à quoi il est considérablement refroidi.

9. Agencement de couvercle (2) selon la revendication 8, **caractérisé en ce que** la zone de chevauchement (5) est de forme cylindrique et couvre toute la circonférence des parois du bol de transformation (4) et du couvercle (2).

10. Agencement de couvercle (2) selon les revendications 6 à 9, **caractérisé en ce que** ledit espace de contact (12) est situé au centre du plan du diaphragme (3), de manière adjacente à la zone profilée (11), et présente une forme en U, s'étendant essentiellement du plan du diaphragme (3) vers le bol de transformation (4) avec seulement un petit passage pour l'air du bol de transformation (4) vers la zone de contact (12), de façon à réduire au maximum la possibilité pour les ingrédients transformés d'entrer dans le compartiment intermédiaire (8).

11. Agencement de couvercle (2) selon l'une quelconque des revendications précédentes, **caractérisé en ce que** ledit diaphragme (3) est fixé sur le couvercle (2) de manière amovible pour faciliter son nettoyage.

12. Agencement de couvercle (2) selon les revendications 1 à 10, **caractérisé en ce que** ledit diaphragme (3) et ledit couvercle (2) font partie intégrante d'une pièce de construction unique, de préférence un moulage 2K ou similaire.

13. Appareil (1) de transformation d'aliments comprenant le couvercle (1) selon les revendications 1 à 12.
